# EUROPEAN PATENT SPECIFICATION

(11) **EP 1 001 866 B1**
(45) Date of publication and mention of the grant of the patent: **24.03.2004**
(21) Application number: 98932650.9
(22) Date of filing: 08.07.1998
(51) Int. Cl.: B25F 1/00

(54) **ILLUMINATION FOR POWER TOOLS**
BELEUCHTUNGSVORRICHTUNG FÜR KRAFTBETRIEBENE WERKZEUGE
DISPOSITIF D'ECLAIRAGE POUR OUTILS MECANIQUES

(30) Priority: 10.07.1997 NZ 32830597; 30.09.1997 NZ 32888097
(43) Date of publication of application: 24.05.2000
(73) Proprietor: Avos Developments Limited, Kelston, Auckland 1007 (NZ)
(72) Inventor: VAN OSENBRUGGEN, Anthony, Alfred, Auckland 1007 (NZ)
(74) Representative: Watkins, Rosalind Philippa
(86) International application number: PCT/NZ1998/000096
(87) International publication number: WO 1999/002310

(56) References cited:
- US-A- 2 662 293
- US-A- 2 855 679
- US-A- 4 480 295
- US-A- 5 023 761
- US-A- 5 267 129
- US-A- 5 678 919

## Description

### TECHNICAL FIELD OF THE INVENTION

This invention relates to a portable illumination unit for providing work-surface lighting and for use with power tools such as electric drills; cordless electric drills, drivers, electric angle grinders, portable circular saws, drop saws, and the like.

### BACKGROUND

Workers are often called on to use power tools in poorly lit places, and there is therefore a need to provide extra lighting in some way. Sometimes it is not feasible to provide general illumination in the workspace and therefore illumination, built into the tool, and focused onto the workplace itself is an alternative.
Known prior art includes:
Screwdrivers having batteries in the handle and a bulb, behind a clear plastic blade holder, shining light at about the end of the blade.
Solder guns with a prefocused bulb aimed at about the position of the wire hairpin.
A flexible light band, carrying an array of light-emitting diodes or LEDs for use around the chuck of a tool, as described in US 5473519 to McCallops et al. This invention is intended, as set out in claim 1, to indicate tool function to an operator. This explains why the lamps are directed tangentially rather than at a work surface.
A power tool having illumination built into an existing battery pack attached at the end of the trigger grip, as described in US 5169225 to Palm, corresponding to the preamble of claim 1. Some tools also include a light beam to indicate the direction of cut, such as the laser diode mounted on a hand-held circular saw guard as described in US 5461790 to Olstowski.

### OBJECT

It is an object of this invention to provide an illumination device compatible with a variety of power tools or one that can provide the public with a useful choice.

### STATEMENT OF INVENTION

The invention provides a portable illumination unit for use with a hand-held power tool for providing illumination upon a workplace, cf. the appended claim 1. Preferred embodiments are defined in the dependent claims. The portable unit comprises electricity supply means held within an accessory handle having an attachment means capable of being reversibly attached to the hand-held tool by at least one standard attachment point.

The lamp means is provided as part of the accessory handle, so that light is directed onto the work surface.

The handle conforms to a standard pattern for power tools.

The illumination unit may be capable of emitting light onto one or more zones within the working area of the tool, wherein a first zone comprises a broad area within which the tool is to be used, and a second zone comprises a line, delineating a cutting line along which the tool is to be used.

The batteries contained within the attachable handle are capable of being replaced from time to time.

Optionally the battery or batteries are capable of being recharged automatically.

Optionally the illuminator is powered from the power supply to the tool, using connectors positioned so as to make contact when the handle is in place.

Preferably, for an electrically powered tool, the portable electricity supply means within the accessory handle is capable by means of connections of exchanging electricity with electricity available elsewhere within the tool.

Preferably the at least one lamp comprises a device capable of directly converting an electric current into visible light; such as one or more halogen bulbs and/or one or more xenon flash or xenon arc bulbs, and/or one or more solid-state lamps.

### DESCRIPTION OF FIGURES

The preferred embodiments to be described and illustrated in this specification are provided purely by way of example.

### DRAWINGS

- Fig 1:: shows a handle and illuminator suitable for use with a power tool, wherein the standard means of attachment is by means of a screw thread received into a threaded aperture in one side of the tool.
- Fig 2:: shows a handle having two kinds of illuminator suitable for use in both lighting the working area and for delineating the cutting line, such as for a hand-held circular saw.
- Fig 3:: shows another handle having two kinds of illuminator suitable for use in both lighting the working area and for delineating the cutting line, such as for a hand-held circular saw.

### PREFERRED EMBODIMENT

The reader should bear in mind that the preferred embodiments to be described herein are provided by way of illustrative example only, and that the invention is limited only by the scope of the appended claims.

The invention may involve the use of replacement parts for standard parts (e.g. Makita part # 27503-9; side handle or Makita part # 152487-3; side handle for angle grinder) of commonly available power tools, wherein the replacement parts also serve as battery packs as well as serving as handles.

### EXAMPLE 1

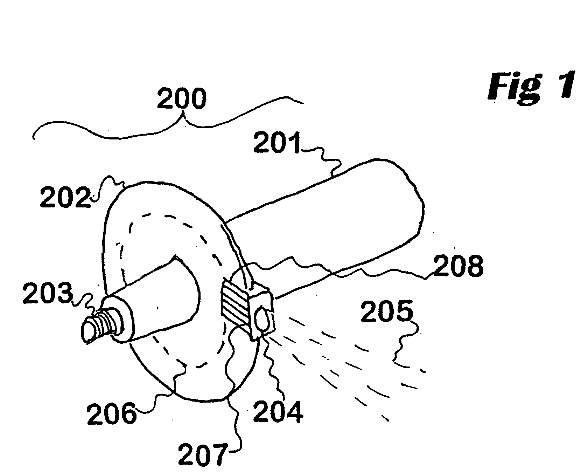

As seen in Fig 1 an illuminator for a power tool can be constructed to match existing standards for handle attachment. Commonly an electric drill or the like is provided with means for attachment of a handle near the chuck. This helps the operator to hold the tool steady, even if torque results as reaction from the action of the bit against work material. Normally such handles are provided with the ability to be mounted on one side or the other, in case the operator is left-handed or right-handed.

According to the invention the handle is hollow and serves as a battery holder, with a suitable number of (preferably) rechargeable batteries inside. These are connected usually at least with a switch to one or more lamps. Current-limiting means may be preferred and may take the form of a light-dependent resistor. This, with suitable control circuitry, may allow the lamp to be energised only in dark environments or, by responding to the lamp's effect, flash on and off and so increase the battery life.

The handle 101 is replaceable so that a fresh set of batteries can be connected without losing time.

One useful option is to provide some electric contacts on the handle, that connect with similar contacts on a mating surface and collar of the tool, that may be used to power the illuminator and/or to recharge batteries housed in the handle, or to supply power to the motor of cordless tools or to supplement the main battery pack of cordless tools. Thus the handle is not totally dependent on batteries that are recharged elsewhere and inserted into the handle.

In Fig 1, the handle 200 is adapted for screwing by means of the thread 203 into a threaded aperture on the power tool. Handles of this design usually include a broad collar 202, to help keep the operator's hand from slipping too close to cutting edges. Batteries are stored in the handle 201, the lamp 204 directs a beam of light 205 towards a desired direction, and in order to compensate for the possibility that when the invention is tightly screwed into the power tool the lamp is not directed properly , the outer part of the collar can be a sort of slip ring 206 so that the actual lamp 204 can be at any part of the periphery of the collar 202. The lamp holder 207 may also be mounted on a hinge 208 so that independent adjustment of the lamp is possible.

### EXAMPLE 2

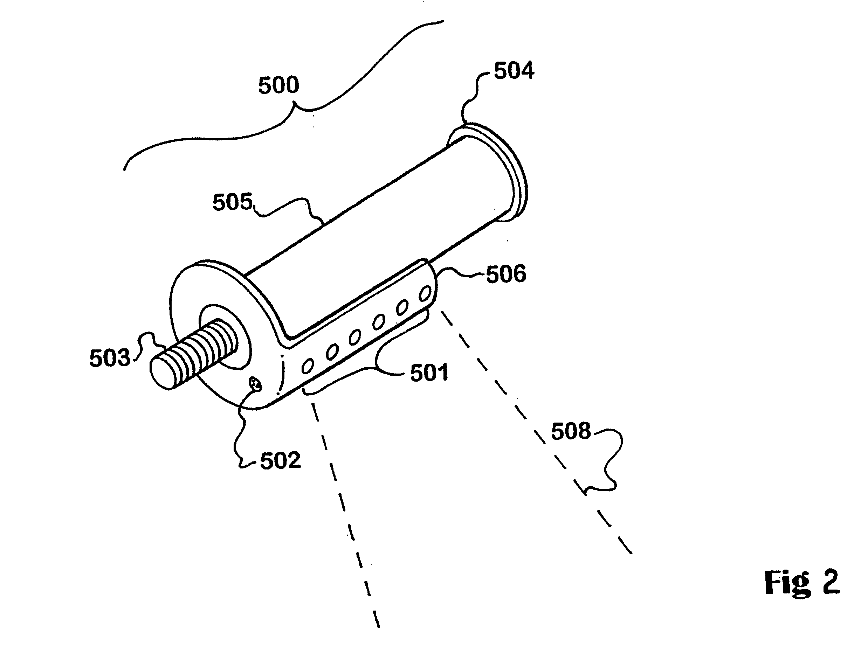

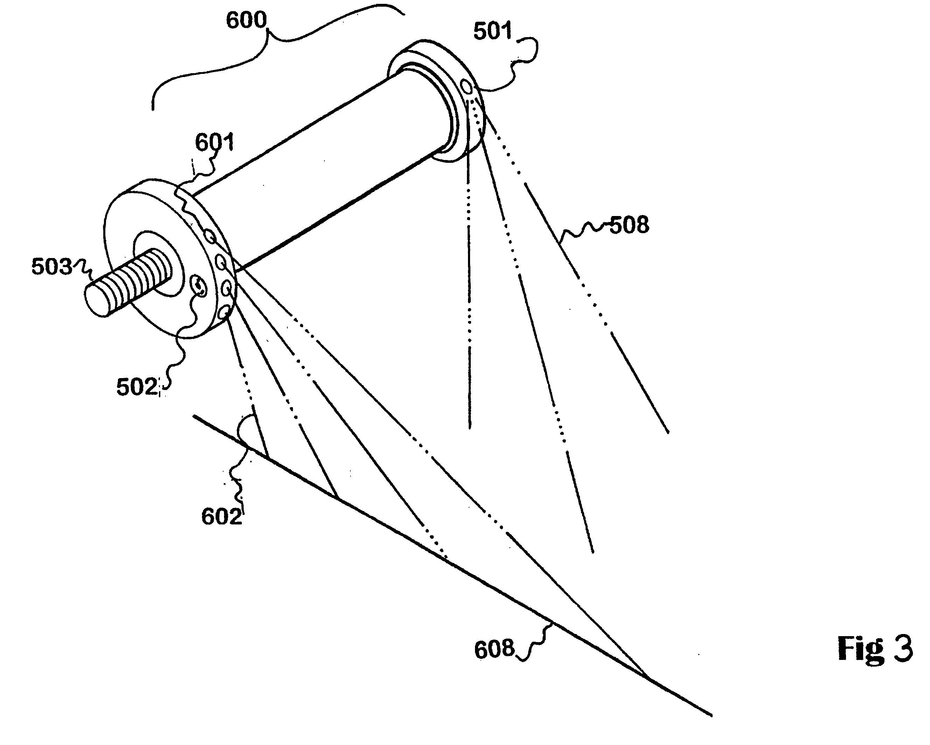

Fig 2 shows a handle 500 capable of being used as an accessory or replacement for a hand-held circular saw, including provisions for two kinds of illuminator; here a bank 501 of light-emitting diodes (or the like) is provided for a wide beam 508, for general illumination. The handle 500 would generally be a self-contained unit, of dimensions similar to those of the plain handle supplied with the circular saw, and includes one or more batteries inside the handle. 504 is a removable lid for changing the batteries. 503 is a standard stud for threading the handle onto the body of the saw unit. Note that in case the stud, when tightened up, does not result in the handle pointing in the correct rotational orientation, we provide for a screw within the body of the saw to be tightened so as to lock the stud so that it can be secured in a desired orientation. Our LED array 501 is a diagrammatic indication of a broad-beam lamp. It has been placed within a shield normally concealing the operator's hand. High-intensity LEDs available at the present time would project from the handle, but in a few years time we expect that they can be provided in a flush mounting package and preferably one that can employ a rear backing plate 506 of metal to help dissipate heat generated within the lamps. Preferably the handle includes means to cause the high-intensity beam to flicker on and off, so that its position is more obvious. Causing the (usually) red line delineating the cutting line to flash periodically (such as at about 0.5 sec on, 0.5 sec off) should enhance its visibility. Fig 3 shows an alternative design of handle 600, in which there is a series of light-emitting units 601 that are arranged so that they illuminate a line 602, and a broader illumination beam 508 is provided from a separate light-emitting area 501. Again, the stud 503 can be locked into place, using for example an Allen screw.

The handle can cast a broad beam of light towards the area of the working surface that is about to be cut. Our preferred light source - based on present-day components - is a red laser diode, because it is insensitive to vibration, because the source is battery-compatible, because the red beam is bright and well-defined and because the beam can be very narrow especially in the axis that we will use as the horizontal axis (assuming a horizontal work surface). Some beam spreading in the vertical axis converts the light from a pencil beam into a widened beam, aimed forwards and slightly downwards, and so makes a line upon a flat work surface.

### EXAMPLE 4

### ADVANTAGES

1. The invention can be used with a wide variety of existing power tools.
2. The powered handle version can be manufactured to suit standard dimensions for the few industry-wide standards for the dimensions of attachable handles.
3. The invention provides illumination close to the working area.
4. When used with a circular-saw the invention may be of assistance in directing the saw to cut along a marked line.
5. The removable handle could be used as a torch in an emergency.

### VARIATIONS

Reasonably directed beams of light can be used to provide a visible indication of perpendicularity of a power tool, such as a drill, with a flat work surface.

Power may be passed from the body of the electric power tool and the illuminator though contacts built into or around the position for insertion of the handle. Then, rechargeable batteries are no longer required. Or control may be imposed by the tool. However, this requires that the tool itself is modified.

Instead of a manual switch to activate illuminators, a vibration/sound sensor or a magnetic field/flux sensor or some combination may be used to determine times when the power tool is energised.

Finally, it will be appreciated that various alterations and modifications may be made to the foregoing without departing from the scope of this invention as set forth in the following claims.

## Claims

1. An illumination unit (600) for providing illumination upon a workplace (608) after attachment to an outer casing or body of a pre-existing hand-held electrically powered power tool (301), **characterised in that** the unit comprises a hollow cylindrical body (600) having a shape substantially like that of a standard accessory handle for the power tool; the body having a first end provided with engagement means (503) capable of reversibly engaging with an existing aperture having compatible engagement means provided in the outer casing or body of the tool, and a second end comprising a removable cap (504) which when removed provides access to a battery compartment capable of holding at least one battery within the hollow cylindrical body (600); the unit being provided with at least one lamp (501, 601) within at least one end of the unit; the or each lamp being provided with connections capable of carrying electricity from the battery compartment, the or each lamp providing, when in use, a visible beam (508, 602) directed towards the workplace (608).

2. An illumination unit as claimed in claim 1, **characterised in that** the visible beam (508) comprises a flood of light capable of illuminating an area on the workplace (608).

3. An illumination unit as claimed in claim 1, **characterised in that** the visible beam (602) comprises a narrow beam of light capable of indicating a specific site on the workplace (608).

4. An illumination unit as claimed in claim 1, **characterised in that** the engagement means comprises a threaded shaft (503) capable of being screwed into a complementary threaded aperture upon the power tool.

5. An illumination unit as claimed in claim 1, **characterised in that** the unit includes means capable of cyclically interrupting the current to the or each lamp, so that the beam (508, 602) directed towards the workplace (608) is made more evident by a visual flickering effect and so that battery power is conserved.

6. An illumination unit as claimed in claim 5, **characterised in that** the rate of cyclic interruption of the current to the or each lamp is such that the lamp is on for about 0.5 seconds and off for about 0.5 seconds, in each cycle.

7. An illumination unit as claimed in claim 1, **characterised in that** the unit includes an electrical connector (502) capable of exchanging electric power between the unit and the power tool, so that the at least one lamp (501, 601) is capable of being powered by electricity derived from the power tool itself.

## Patentansprüche

1. Ein Beleuchtungsgerät (600) zum Beleuchten eines Arbeitsplatzes (608) bei Anbringung am Gehäuse oder Körper eines existierenden, handgehaltenen, elektrisch betriebenen Werkzeugs (301), dadurch charakterisiert, dass das Gerät aus einem hohlen, zylindrischen Körper (600) besteht, der grösstenteils wie ein Standard-Zubehörhebel für das elektrische Werkzeug ausgebildet ist; wobei dieser Körper ein Ende mit einem Einrastmittel (503) hat, das in der Lage ist, in eine existierende, sich am Gehäuse des Werkzeugs befindliche Öffnung mit kompatibler Einrastvorrichtung einzurasten; sowie ein zweites Ende, bestehend aus einem abnehmbaren Deckel (504), der nach Abnehmen Zugang zu einem Batteriefach mit Raum für mindestens eine Batterie im hohlen, zylindrischen Körper (600) bietet; wobei das Gerät mit mindestens einer Lampe (501, 601) an mindestestens einem der Enden des Geräts ausgestattet ist; wobei die eine oder jede der Lampen mit Anschlüssen versehen ist, die in der Lage sind, Strom vom Batteriefach zu leiten, und wobei diese oder jede dieser Lampen einen sichtbaren Lichtstrahl (508, 602) auf den Arbeitsplatz richtet.

2. Ein Beleuchtungsgerät gemäss Anspruch 1, dadurch charakterisiert, dass der sichtbare Lichtstrahl (508) aus einer Lichtflut besteht, die in der Lage ist, eine Fläche des Arbeitsplatzes (608) zu beleuchten.

3. Ein Beleuchtungsgerät gemäss Anspruch 1, dadurch charakterisiert, dass der sichtbare Lichtstrahl (602) aus einem schmalen Lichtstrahl besteht, der eine spezifische Region des Arbeitsplatzes (608) beleuchtet.

4. Ein Beleuchtungsgerät gemäss Anspruch 1, dadurch charakterisiert, dass das Einrastmittel aus einem Gewindeschaft (503) besteht, der in eine gleichermassen mit einem Gewinde versehene Öffnung auf dem elektrischen Werkzeug eingeschraubt werden kann.

5. Ein Beleuchtungsgerät gemäss Anspruch 1, dadurch charakterisiert, dass das Gerät Vorrichtungen enthält, die zyklisch den Strom zu der Lampe oder einer der Lampen unterbrechen können, sodass der auf den Arbeitsplatz (608) gerichtete Lichtstrahl (508, 602) durch visuellen Flackereffekt deutlicher ausgeprägt und Batteriestrom konserviert wird.

6. Ein Beleuchtungsgerät gemäss Anspruch 5, dadurch charakterisiert, dass die zyklische Stromunterbrechungsrate zu der oder jeder der Lampen so ausgelegt ist, dass die Lampe pro Zyklus jeweils für 0,5 Sekunden an und für 0,5 Sekunden aus ist.

7. Ein Beleuchtungsgerät gemäss Anspruch 1, dadurch charakterisiert, dass das Gerät einen elektrischen Anschluss (502) enthält, mit dem elektrischer Strom zwischen dem Gerät und dem elektrischen Werkzeug geleitet werden kann, sodass zumindest eine Lampe (501, 601) durch Strom vom elektrischen Werkzeug betrieben werden kann.

## Revendications

1. Une unité d'éclairage (600) pour éclairer un lieu de travail (608) après fixation à un boîtier extérieur ou carter d'un outil électrique à main préexistant (301), **caractérisée en ce que** l'unité comprend un carter cylindrique creux (600) ayant une forme en substance similaire à celle d'une poignée accessoire standard de l'outil électrique, le carter ayant une première extrémité fournie avec un moyen d'engagement (503) capable de s'engager de manière réversible avec une ouverture existante ayant un moyen d'engagement compatible prévu dans le boîtier extérieur ou carter de l'outil, et une deuxième extrémité comprenant un bouchon amovible (504) lequel une fois retiré permet d'accéder à un compartiment de piles pouvant contenir au moins une pile dans le carter cylindrique creux (600); l'unité étant fournie avec au moins une lampe (501, 601) dans au moins une extrémité de l'unité, la lampe ou chaque lampe étant fournie avec des raccordements pouvant transporter l'électricité en provenance du compartiment de piles, la lampe ou chaque lampe fournissant, lorsqu'elle est utilisée, un faisceau visible (508, 602) dirigé vers le lieu de travail (608).

2. Une unité d'éclairage selon la revendication 1, **caractérisée en ce que** le faisceau visible (508) comprend un flot de lumière capable d'éclairer une zone du lieu de travail (608).

3. Une unité d'éclairage selon la revendication 1, **caractérisée en ce que** le faisceau visible (602) comprend un étroit jet de lumière capable d'indiquer un site particulier sur le lieu de travail (608).

4. Une unité d'éclairage selon la revendication 1, **caractérisée en ce que** le moyen d'engagement comprend un arbre fileté (503) pouvant être visé dans une ouverture filetée complémentaire sur l'outil électrique.

5. Une unité d'éclairage selon la revendication 1, **caractérisée en ce que** l'unité comprend un moyen pouvant interrompre par cycle le courant vers la ou chaque lampe, de manière à ce que le faisceau (508, 602) dirigé vers le lieu de travail (608) soit rendu plus visible par un effet clignotant visuel et de manière à économiser la puissance de la pile.

6. Une unité d'éclairage selon la revendication 5, **caractérisée en ce que** le taux de l'interruption cyclique du courant vers la ou chaque lampe soit tel que la lampe soit allumée pendant environ 0,5 secondes et éteinte pendant environ 0,5 secondes, dans chaque cycle.

7. Une unité d'éclairage selon la revendication 1, **caractérisée en ce que** l'unité comprend un connecteur électrique (502) capable d'échanger du courant électrique entre l'unité et l'outil électrique, de manière à ce que au moins une lampe (501, 601) puisse être alimentée par l'électricité dérivée dudit outil électrique.
